Europäisches Patentamt

European Patent Office

Office européen des brevets

(19)

(11) Numéro de publication: **0 220 102**
**B1**

(12) **FASCICULE DE BREVET EUROPEEN**

(45) Date de publication du fascicule du brevet:
**11.01.89**

(51) Int. Cl.⁴: **B60T 13/68**

(21) Numéro de dépôt: **86402151.4**

(22) Date de dépôt: **01.10.86**

(54) **Dispositif d'électrovalve de commande.**

(30) Priorité: **09.10.85 FR 8514948**

(43) Date de publication de la demande:
**29.04.87 Bulletin 87/18**

(45) Mention de la délivrance du brevet:
**11.01.89 Bulletin 89/2**

(84) Etats contractants désignés:
**DE ES GB IT**

(56) Documents cités:
**EP-A- 0 120 143**
**DE-A- 3 327 683**
**US-A- 3 814 132**

**MACHINE DESIGN,**
**vol. 35, no. 2, 17 janvier 1963, pages 160-166; J.E.**
**ELLISON: "Solenoid valves"**

(73) Titulaire: **BENDIX France, 126, rue de Stalingrad,**
**F-93700 Drancy(FR)**

(72) Inventeur: **Pichon, Jean-Michel, 12, rue Clotilde Bataille,**
**F-77410 Messy(FR)**

(74) Mandataire: **Lejet, Christian et al, Division Technique**
**Service Brevets BENDIX Europe 126, rue de Stalingrad,**
**F-93700 Drancy(FR)**

## Description

La présente invention concerne les dispositifs d'électrovalve de commande, notamment pour circuits de freinage de véhicules, du type comprenant un boîtier définissant une cavité intérieure formant partie d'un trajet de fluide et débouchant vers l'extérieur par une ouverture, et une électrovanne montée dans le boîtier et comprenant un corps d'électrovanne, solidaire d'un bornier de raccordement transversal et disposé dans la cavité du boîtier avec le bornier faisant saillie hors du boîtier par l'ouverture, un noyau traversant le corps d'électrovalve et ayant des première et seconde extrémités faisant saillie de part et d'autre du corps pour positionner ce dernier dans la cavité, le noyau comprenant une première et une seconde parties coaxiales, au moins la seconde partie étant tubulaire et formant la dite seconde extrémité en saillie, et un plongeur d'électrovalve formant élément de clapet, monté à coulissement dans la seconde partie de noyau et comprenant une extrémité faisant saillie hors de la dite seconde extrémité du noyau et sollicitée par un ressort de clapet.

Un dispositif d'électrovalve de commande de ce type est figuré dans le document DE-A 3 327 683. Dans les dispositifs connus de ce type, le corps d'électrovalve est positionné, avec interposition de joints d'étanchéité, entre deux éléments de boîtier assemblés, dans un agencement imposant un usinage et un assemblage précis des éléments de boîtier, ainsi que des faces de montage du corps d'électrovalve et des éléments constitutifs internes de l'électrovalve sans possibilité de rattrapage in situ des jeux fonctionnels et des dispersions d'entrefer.

La présente invention a pour objet de proposer un dispositif d'électrovalve de commande du type sus mentionné de coûts de fabrication et de montage réduits, permettant de s'affranchir de tolérances sévères et convenant à une fabrication en grande série avec une faible dispersion des caractéristiques du dispositif d'électrovalve.

Pour ce faire, selon une caractéristique de l'invention, l'ouverture de passage du bornier transversal est formée dans une paroi d'un élément de boîtier unitaire définissant partiellement la cavité, le dispositif comprenant un élément d'assemblage monté dans l'élément de boîtier et coopérant en engagement avec la seconde extrémité en saillie du noyau pour immobiliser ce dernier dans l'élément de boîtier.

Selon une caractéristique plus particulière de l'invention, il est prévu, dans la cavité, une surface d'appui avec laquelle la première extrémité de noyau, formée par la première partie de noyau, coopère en butée sous l'effet de l'engagement de l'élément d'assemblage avec la seconde extrémité de noyau, constituée par la seconde partie de noyau.

Selon encore une autre caractéristique de l'invention, l'ouverture a une section correspondant à la section transversale du bornier, l'étanchéité entre la cavité et l'extérieur étant assurée entre la paroi interne de l'ouverture et la paroi périphérique externe du bornier.

Avec un tel agencement, l'électrovalve est disposée dans un élément de boîtier unitaire, supprimant ainsi les problèmes d'appareillement dans le cas d'un montage au moyen de deux éléments de boîtier assemblés, et les faces éxternes du corps d'électrovalve n'ont plus de caractère fonctionnel au plan de l'assemblage et peuvent donc être réalisées de façon relativement peu précise. D'autre part, la fixation indépendante du noyau dans l'élément de boîtier permet de rattraper les jeux fonctionnels et donc de minimiser les entrefers et les dispersions magnétiques.

D'autres caractéristiques et avantages de la présente invention ressortiront de la description suivante de modes de réalisation, donnés à titre illustratif mais nullement limitatif, faite en relation avec les dessins annexés, sur lesquels:

la figure 1 est une vue schématique en coupe longitudinale partielle d'un premier mode de réalisation d'un dispositif d'électrovalve de commande selon l'invention; et

la figure 2 est une vue en coupe longitudinale partielle d'un second mode de réalisation de dispositif d'électrovalve de commande selon l'invention.

Dans la description qui va suivre, les éléments identiques ou analogues dans les deux modes de réalisation portent les mêmes chiffres de référence.

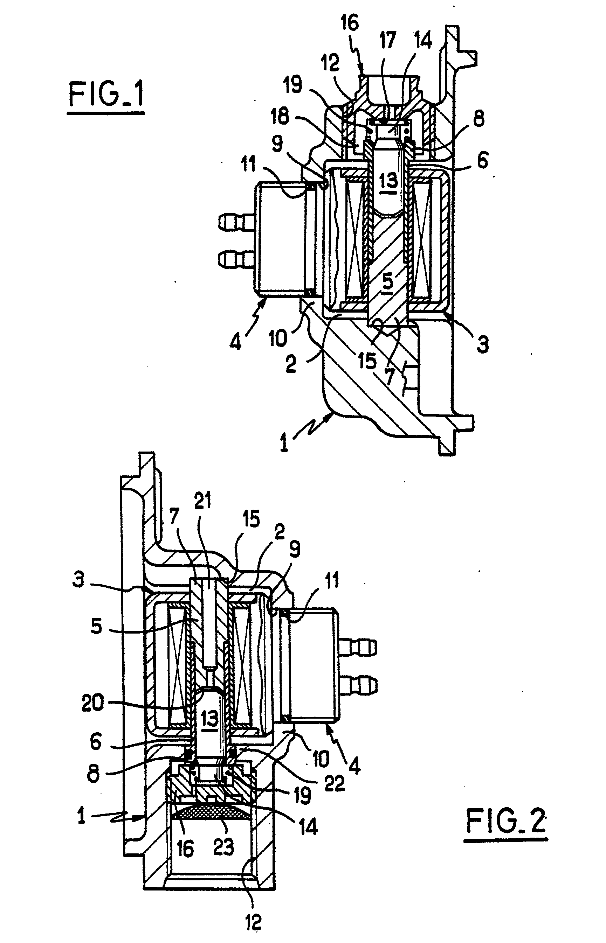

On a représenté sur la figure 1, à titre d'exemple illustratif mais nullement limitatif, un dispositif d'électrovalve de commande pour ensemble modulateur d'un circuit de freinage pneumatique de poids lourd. Le dispositif selon l'invention comprend un élément de boîtier unitaire, désigné généralement par la référence 1, destiné à être rapporté sur une partie de boîtier principale (non représentée) et définissant une cavité intérieure 2 formant partie d'un trajet de fluide dans l'ensemble modulateur commandé par une électrovalve comprenant un corps d'électrovalve 3 renfermant une armature et au moins un enroulement susceptible d'être relié à un circuit électrique de commande (non représenté) par un bornier 4 solidaire du corps d'électrovalve 3 et s'étendant perpendiculairement, latéralement, par rapport à l'axe général du corps d'électrovalve 3. L'électrovalve comprend un noyau traversant coaxialement le corps d'électrovalve 3 et faisant saillie vers l'extérieur de part et d'autre de ce dernier. Le noyau est constitué par un assemblage coaxial d'une première partie de noyau 5 et d'une seconde partie de noyau tubulaire 6. La première partie de noyau 5 forme ainsi une première extrémité de noyau en saillie 7 de forme cylindrique avec une face d'éxtrémité typiquement plane, la seconde partie de noyau 6 formant une seconde extrémité de noyau 8 tubulaire et de diamètre extérieur élargi. La cavité intérieure 2 débouche vers l'extérieur de l'élément de boîtier par une ouverture 9 formée dans une paroi latérale 10 de l'élément de boîtier 1 et présentant une section correspondant à la section transversale du bornier 4, lequel traverse ainsi l'ouverture 9 en étant guidé et centré, un joint d'étanchéité 11, avantageusement porté par le bornier 4, assurant l'étanchéité entre la cavité intérieure 2 et l'extérieur de l'élément de boîtier 1. La cavité intérieure 2 communique également avec l'extérieur de l'élément de boîtier 1 par un logement 12, typiquement un alésage taraudé, coaxial au noyau 5, 6 dans la configuration de montage final de l'électrovalve. L'électrovalve comporte un plongeur d'électrovalve 13 reçu à coulissement dans la seconde partie de noyau 6 et ayant une extrémité extérieure 14 s'étendant en saillie hors de l'extrémité 8 de la seconde partie de noyau 6 dans le logement 12.

Conformément à l'invention la cavité intérieure 2 comporte une surface d'appui intérieure 15 orthogonale à l'axe du noyau 5, 6 typiquement formée par une portion de la paroi de la cavité 2, avec laquelle vient coopérer en appui de butée l'extrémité en saillie 7 de la première partie de noyau 5 sous l'effet d'une sollicitation axiale exercée sur l'extrémité en saillie 8 de la seconde partie de noyau 6 par un élément d'assemblage 16 monté dans le logement 12 et coopérant en engagement avec cette extrémité 8 de la seconde partie de noyau 6, dans un agencement verrouillant ainsi en position l'électrovalve dans l'élément de boîtier 1.

L'élément d'assemblage 16 présente typiquement un filetage extérieur pour son vissage dans le taraudage du logement 12 et forme un élément de raccordement de la cavité à un circuit de fluide extérieur (non représenté) (en l'occurence, dans le mode de réalisation de la Fig. 1, une mise à l'air libre de la cavité 2). Sur la Fig. 1 l'élément d'assemblage 16 définit centralement un siège de clapet 17 avec lequel coopère sélectivement l'extrémité extérieure 14, formant ici élément de clapet, du plongeur d'électrovalve 13, afin de commander la communication entre le circuit de fluide extérieur et la cavité intérieure 2. Comme on le voit dans la figure 1, l'élément d'assemblage 16 comporte des nervures axiales intérieures 18 coopérant en engagement avec l'extrémité en saillie 8 de la seconde partie de noyau 6, ménageant ainsi un passage de fluide entre le siège de clapet 17 et la cavité intérieure 2, l'extrémité extérieure 14 formant élément de clapet du plongeur 13 étant sollicitée vers le siège de clapet 17 par un ressort 19 prenant appui sur l'extrémité 8 de la seconde partie de noyau 6 et coaxiale à l'extrémité en saillie 14 du plongeur 13. On comprendra que, comme sus mentionné, la fixation par vissage indépendant, via l'élément d'assemblage 16, du noyau 5, 6 permet de rattraper les jeux fonctionnels et de minimiser les entrefers, la réalisation du siège de clapet 17 sur l'élément d'assemblage 16 permettant en outre de réduire les dispersions d'entrefer.

Dans le mode de réalisation représenté sur la figure 2, la première partie de noyau 5 présente également une configuration tubulaire creuse, son extrémité intérieure 20 formant, ici, siège de clapet coopérant avec l'extrémité intérieure formant élément de clapet du plongeur 13 pour commander la communication entre le passage interne 21 dans la première partie de noyau 7 et le logement 12, via des canaux formés longitudinalement dans la périphérie du plongeur 13. Dans ce mode de réalisation, l'extrémité en saillie 8 de la seconde partie de noyau 6 est montée étanche dans un alésage coaxial d'une paroi 22 formée dans l'élément de boîtier entre la cavité intérieure 2 et le logement 12 et fait saillie axialement hors de cet alésage pour coopérer avec l'extrémité intérieure de l'élément d'assemblage 16 vissé dans le fond du logement 12 et formant centralement butée de retour pour l'extrémité 14 du plongeur 13 sous l'effet du ressort de rappel 19, le logement 12 étant dimensionné pour recevoir un raccord de raccordement à un circuit de fluide extérieur (non représenté) et étant avantageusement pourvu d'un filtre intérieur 23.

## Revendications

1. Dispositif d'électrovalve de commande, comprenant un boîtier (1) définissant une cavité intérieure (2) formant partie d'un trajet de fluide et débouchant vers l'extérieur par une ouverture (9), et une électrovalve montée dans le boîtier et comprenant un corps d'électrovalve (3), solidaire d'un boîtier de raccordement transversal (4) et disposé dans la cavité (2) avec le bornier faisant saillie hors du boîtier (1) par l'ouverture (9), un noyau traversant le corps d'électrovalve et ayant des première (7) et seconde (8) extrémités faisant saillie de part et d'autre du corps pour positionner ce dernier dans la cavité (2), le noyau étant constitué d'une première (5) et d'une seconde (6) parties de noyau coaxiales, au moins la seconde partie de noyau (6) étant tubulaire et formant la dite seconde extrémité en saillie (8), et un plongeur d'électrovalve (13), formant élément de clapet, monté à coulissement dans la seconde partie de noyau (6) et comprenant une extrémité (14) faisant saillie hors de la seconde extrémité de noyau (8) et sollicitée par un ressort de clapet (19), caractérisé en ce que l'ouverture (9) est formée dans une paroi (10) d'un élément de boîtier unitaire (1) définissant partiellement la cavité intérieure (2), le dispositif comprenant un élément d'assemblage (16) monté dans l'élément de boîtier (1) et coopérant en engagement avec la seconde extrémité de noyau en saillie (8) pour immobiliser le noyau dans l'élément de boîtier (1).

2. Dispositif selon la revendication 1, caractérisé en ce qu'il comprend, dans la cavité (2), une surface d'appui (15) avec laquelle la première extrémité de noyau (7), formée par la première partie de noyau (5), coopère en butée.

3. Dispositif selon la revendication 2, caractérisé en ce que l'ouverture (9) a une section correspondant à la section transversale du bornier (4).

4. Dispositif selon la revendication 3, caractérisé en ce que l'élément d'assemblage (16) est monté dans un logement (12) de l'élément de boîtier (1) coaxial au noyau (5, 6) et débouchant dans la cavité intérieure (2).

5. Dispositif selon la revendication 4, caractérisé en ce que l'élément d'assemblage (16) est vissé dans une partie taraudée du logement (12).

6. Dispositif selon la revendication 4 ou la revendication 5, caractérisé en ce que le logement (12) forme orifice de raccordement du trajet de fluide avec un circuit de fluide externe.

7. Dispositif selon la revendication 6, caractérisé en ce que l'élément d'assemblage (16) forme un siège de clapet (17) coopérant avec ladite extrémité en saillie (14) du plongeur (13) formant ledit élément de clapet.

8. Dispositif selon la revendication 6, caractérisé en ce que la première partie de noyau (5) est également tubulaire et comporte une extrémité intérieure (20) formant siège de clapet coopérant avec l'extrémité adjacente formant élément de clapet du plongeur (13).

9. Dispositif selon l'une quelconque des revendications précédentes, caractérisé en ce que le ressort de clapet (19) est disposé entre la seconde extrémité en saillie de noyau (8) et l'extrémité en saillie (14) du plongeur (13).

10. Dispositif selon l'une quelconque des revendications précédentes, caractérisé en ce que la surface d'appui (15) est formée par une portion de l'élément de boîtier (1) orthogonale à l'axe du noyau (5, 6).

## Claims

1. Solenoid valve control device, comprising a casing (1) which defines an internal cavity (2) which forms part of a fluid path and which opens to the outside through an aperture (9), and a solenoid valve which is mounted within the casing and which comprises a solenoid valve body (3), which is firmly fixed to a transverse connection terminal block (4) and is situated in said cavity (2) with said terminal block projecting out of said casing (1) through said aperture (9), a core extending through said solenoid valve body and having first (7) and second (8) ends projecting outwardly from each side of said body so as to position the latter in said cavity (2), said core consisting of coaxial first (5) and second (6) core portions, at least said second core portion (6) being tubular and forming said second projecting end (8), and a solenoid valve plunger (13), which forms a valve member and which is slidably mounted in said second core portion (6) and which comprises one end (14) which projects out of said second core end (8) and which is biased by a valve spring (19), characterized in that said aperture (9) is formed in a wall (10) of a one-piece casing member (1) which partially defines said internal cavity (2), said device comprising an assembling member (16) which is mounted within said casing member (1) and which cooperated in engagement with said second projecting core end (8) so as to immobilize said core in said casing member (1).

2. Device according to claim 1, characterized in that it comprises, in said cavity (2), a bearing surface (15) with which said first core end (7), formed by said first core portion (5), cooperates in abutment.

3. Device according to claim 2, characterized in that said aperture (9) has a cross-section which corresponds to the transverse cross-section of said terminal block (4).

4. Device according to claim 3, characterized in that said assembling member (16) is mounted in an opening (12) in said casing member (1) which is coaxial with said core (5, 6) and which opens into said internal cavity (2).

5. Device according to claim 4, characterized in that said assembling member (16) is screwed into a tapped portion of said opening (12).

6. Device according to claim 4 or claim 5, characterized in that said opening (12) forms a passage for connecting said fluid path with an external fluid circuit.

7. Device according to claim 6, characterized in that said assembling member (16) forms a valve seat (17) which cooperates with said projecting end (14) of said plunger (13) forming said valve member.

8. Device according to claim 6, characterized in that said first core portion (5) is also tubular and comprises an inner end (20) which forms a valve seat which cooperates with the adjacent end forming a valve member of said plunger (13).

9. Device according to any one of the preceding claims, characterized in that said valve spring (19) is situated between said second projecting core end (8) and said projecting end (14) of said plunger (13).

10. Device according to any one of the preceding claims, characterized in that said bearing surface (15) is formed by a portion of said casing member (1) which is at right angles to the axis of the core (5, 6).

## Patentansprüche

1. Magnetventil-Betätigungsvorrichtung mit einem Gehäuse (1), das einen Innenraum (2) definiert, der einen Teil eines Strömungsweges bildet und über eine Öffnung (9) nach außen hin offen ist, und einem Magnetventil, das in dem Gehäuse angebracht ist und einen Magnetventilkörper (3) aufweist, welcher mit einem quer verlaufenden Anschlußkörper fest verbunden und in dem Innenraum (2) angeordnet ist, wobei der Anschlußkörper durch die Öffnung (9) aus dem Gehäuse (1) vorsteht, einem Kern, der quer durch den Magnetventilkörper verläuft und ein erstes Ende (7) und ein zweites Ende (8) besitzt, die beidseitig zu dem Magnetventilkörper vorstehen, um diesen in dem Innenraum (2) zu positionieren, wobei der Kern von einem ersten Kernteil (5) und einem zweiten Kernteil (8) gebildet wird, die koaxial zueinander sind, wobei mindestens der zweite Kernteil (6) rohrförmig ausgebildet ist und das vorstehende zweite Ende (8) bildet und einem das Ventilglied bildenden Magnetventil-Anker (13), der in dem zweiten Kernteil (6) gleitend gelagert ist und ein Ende (14) aufweist, das aus dem zweiten Ende des Kerns (8) vorsteht und von einer Ventilfeder (19) vorgespannt wird, dadurch gekennzeichnet, daß die Öffnung (9) in einer Wand (10) eines einstückigen Gehäuseteils (1) gebildet ist, das teilweise den Innenraum (2) bildet, wobei die Vorrichtung ein Einbauteil (16) aufweist, das in dem Gehäuseteil (1) angebracht ist und mit dem zweiten vorstehenden Ende (8) des Kerns zusammenwirkt, um den Kern in dem Gehäuseteil (1) festzulegen.

2. Vorrichtung nach Anspruch 1, dadurch gekennzeichnet, daß sie in dem Innenraum (2) eine Anlagefläche (15) aufweist, mit der das erste Ende (7) des Kerns, das von dem ersten Kernteil (5) gebildet wird, anlagemäßig zusammenwirkt.

3. Vorrichtung nach Anspruch 2, dadurch gekennzeichnet, daß die Öffnung (9) einen Querschnitt hat, der der Querschnitt des Anschlußkörpers (4) entspricht.

4. Vorrichtung nach Anspruch 3, dadurch gekennzeichnet, daß das Einbauteil (16) in einer Aufnahme (12) des Gehäuseteils (1) untergebracht ist, die koaxial zum Kern (5, 6) verläuft und in den Innenraum (2) mündet.

5. Vorrichtung nach Anspruch 4, dadurch gekennzeichnet, daß das Einbauteil (16) in einem Gewindeabschnitt der Aufnahme (12) eingeschraubt ist.

6. Vorrichtung nach Anspruch 4 oder 5, dadurch gekennzeichnet, daß die Aufnahme (12) einen Durchlaß des Strömungsweges an einem externen Strömungskreis bildet.

7. Vorrichtung nach Anspruch 6, dadurch gekennzeichnet, daß das Einbauteil (16) einen Ventilsitz (17) bildet, der mit dem vorstehenden Ende (14) des das Ventilglied bildenden Plungers (13) zusammenwirkt.

8. Vorrichtung nach Anspruch 6, dadurch gekennzeichnet, daß das erste Kernteil (5) ebenfalls rohrförmig ausgebildet ist und ein den Ventilsitz bildendes inneres Ende (20) aufweist, das mit dem das Ventilglied bildenden angrenzenden Ende des Plungers (13) zusammenwirkt.

9. Vorrichtung nach einem der vorhergehenden Ansprüche, dadurch gekennzeichnet, daß die Ventilfeder (19) zwischen dem zweiten vorstehenden Ende des Kerns (8) und dem vorstehenden Ende (14) des Plungers (13) angeordnet ist.

10. Vorrichtung nach einem der vorhergehenden Ansprüche, dadurch gekennzeichnet, daß die Anlagefläche (15) aus einem Teil des Gehäuses (1) gebildet ist im rechten Winkel zur Kernachse.

## FIG_1

## FIG_2